# EUROPEAN PATENT SPECIFICATION

(11) **EP 1 138 196 B1**
(45) Date of publication and mention of the grant of the patent: **08.09.2004**
(21) Application number: 01200756.3
(22) Date of filing: 01.03.2001
(51) Int. Cl.: A01K 1/02, A01K 1/00

(54) **Animal shelter and fence for such an animal shelter**
Tierunterkunft und Zaun für eine solche Tierunterkunft
Abri pour animaux et clôture pour un tel abri pour animaux

(30) Priority: 09.03.2000 NL 1014592
(43) Date of publication of application: 04.10.2001
(60) Divisional application: 04103432.3
(73) Proprietor: van Dal, Cornelis, 5066 AN Moergestel (NL)
(72) Inventor: van Dal, Cornelis, 5066 AN Moergestel (NL)
(74) Representative: Smeets, Eugenius Theodorus J. M.

(56) References cited:
- US-A- 2 008 637
- US-A- 5 218 925
- "KÄLBER-IGLU System Flix-Box" , GEORG MAYER , TITTMONING (D) XP002150258 * the whole document *

## Description

The invention relates to an animal shelter with a house which is provided with walls and a roof and of which one wall is provided with an opening, and with a fence provided with a front wall and two side walls whose free ends are movably fastened to the house, which fence in a first position forms a pen in conjunction with the wall of the house provided with the opening in the space in front of the opening and is displaceable from said first position into a second position in which the side walls of the fence lie on either side of the house such that the space in front of the opening becomes freely accessible. Such a shelter is advantageously used for, for example, a calf. After the birth of the calf, it is used as a temporary accommodation before the calf is returned again to the stable where it was born. This promotes the wellbeing, health, and condition of the animal, which aspects in their turn reduce medical expenses and increase the yield. The invention also relates to a fence and a house suitable for such a shelter.

Such an animal shelter is known from the American patent US 5,218,925 published on June 15th, 1993. This describes a box-shaped calf shelter to which a moveable fence is coupled, forming a pen for the calf. The fence is fastened to rails which are mounted against the side walls of the box. The fence can slide alongside the box in the rails and can also be pivoted upwards over the box.

A similar animal shelter is known from the sales pamphlet "KÄLBER-IGLU System Flix-Box" GEORG MAYER, TITMONIG (D) XP002150528. The side-walls of the fence of the animal shelter contain parts that are releasably attached to the fence and to the house. After detachment of these parts, the fence can be pivoted over the house and the detached parts can be positioned in front of an opening in the house.

It is a disadvantage of the known animal shelter that it is not easy to clean. It is true that the space of the pen can be cleaned when the fence is slid inwards along the box, but the box itself cannot be cleaned then. When the fence is pivoted over the box, it is easy to clean the space of the pen as well as the box itself. Cleaning of the shelter, however, is not so easy when the animal is in its box.

It is an object of the present invention, accordingly, to provide an animal shelter which can be easily cleaned at low labor cost, preferably independently of the presence of an animal in the shelter. The arrangement provided should in addition be as simple as possible and easy to manufacture.

According to the invention, an animal shelter of the kind mentioned in the opening paragraph is for this purpose characterized in that the fence comprises a part which is movable relative to the fence, which provides the fence with a closure which can be opened when the fence is in the first position, and which is present in a recess of the fence having a smaller height than the fence proper, and in that said part is present in the front wall of the fence. The invention is based on the recognition that a part of the fence may be constructed such that this part, when the fence is in its first position, can provide access to the pen, and thus to the house, for humans and animals. The part of the fence is movable relative to the fence, so that humans and animals can pass. Positioning of the movable part of the fence in a recess of the fence having a lower height than the fence proper ensures that a further portion of the fence situated above or below the recess provides a fixed interconnection between the portions of the fence lying on either side of the movable part. As a result of this, the fence still has a sufficient coherence and sturdiness so that it can be slid or pivoted in its entirety over the house, in spite of the presence of a movable part in the fence. An animal shelter is thus created which on the one hand can be more easily cleaned and which on the other hand still offers the advantages inherent in the mobility of the fence relative to the house. Preferably, the further portion forming the fixed interconnection between the portions of the fence lying on either side of the movable part is present at the lower side of the fence. Humans and animals can then easily pass through the (opened) closure of the pen, irrespective of the height of the fence.

In a preferred embodiment, the movable part provides the opening of the house with a closure which can be opened after the fence has been displaced from the first into the second position and possibly after a movement of the movable part. As a result of this it is possible on the one hand to enter the house for cleaning purposes after the fence has been moved from the first into the second position, while on the other hand the animal present therein can remain boxed in. It is in addition possible in this position to introduce an animal into the house or take it from the house.

In a further preferred embodiment, the movable part of the fence is fastened to the fence with hinging possibility at one side thereof and in a manner so as to be collapsible outwards at another side opposed to the hinging side. In a first modification thereof, the hinging part, which preferably has the form of a door, is present in the front wall of the fence opposite the opening of the house. After the fence has been passed along the sides of the house, the hinging part then at the same time forms the closure of the house which can be opened. In a modification thereof not according to the invention, the hinging part is present in a side wall of the fence adjacent an end thereof, the hinging part then lying at the lower side of the fence. When the fence is out in front of the house, said part can be pivoted down through 90°, so that an entrance to the pen is provided. When the fence is pivoted over the house, the movable part can be collapsed through 270°, so that it forms a closure of the house which can be opened. The height of the fence and the dimensions of the movable part are made to fit the width of the opening and the width of the house, respectively.

In a very favorable embodiment of an animal shelter according to the invention, the movable part of the fence is removable therefrom and can be fastened in or in front of the opening of the house in a detachable manner. When the fence has been passed along the sides of the house, the part - provided it is present in the front wall of the fence - immediately forms a closure for the house, which closure can be opened. With the part taken from the fence and placed in or in front of the opening of the house, the fence may also be pivoted over the house, irrespective of the location of the recess. The arrangement of the removable part in the front wall of the fence is most favorable because it also allows both a translatory and a pivoting movement of the fence. An additional advantage of this is that the fence and the house can always be accessed from the front. This makes it possible to place a number of animal shelters next to and closely adjacent one another. The area required for accommodating the animal shelters is then as small as possible, and the labor cost, for example for cleaning of the animal shelters, is also minimized.

Preferably, the lower side of the removable part of the fence is provided with a profile which mates with the further portion of the fence present therebelow and below the recess and with a threshold arranged at the lower side of the opening of the house. The upper side of the removable part, the fence, and the house are preferably provided with fastening or locking means for the removable part. Preferably, the removable part is provided with means for fastening a drink or feed trough, for example in the form of a (hinging) ring. A bucket of conical shape may be introduced therein. A major advantage of this modification is that the removable part fitted with a filled drink or feed trough may be placed in or in front of the house before the house is pivoted. Were such a drink or feed trough pivoted along with the house, then the drink or feed trough would be wholly or partly emptied, which is undesirable. The removable part is preferably symmetrical. When it is placed in the fence or in the opening, a drink or feed trough fastened thereto may then be inside or outside the pen or house, as desired. This can facilitate refilling and offers a possibility of protecting the fodder against precipitation such as rain in that the trough is arranged inside the house. The removable part is preferably provided with an opening through which the animal can reach the trough with its head.

A further very favorable embodiment of an animal shelter according to the invention, in which the fence can be pivoted over the house about a fastening point of the fence to the house, is characterized in that the pivot and fastening point is situated close to the lower side of the house and the fence. This construction renders possible inter alia a modification described above in which a hinging part in a side wall can be collapsed outwards therefrom and - after the fence has been pivoted over the house - will form a closure of the house which can be opened. A further advantage is that the fence need not rest on the roof of the house after being pivoted, but on the floor or on a portion of the house supported thereby, such as an outward flange fastened to the lower side of the house. The risk of damage and the mechanical load on the house are small as a result. A threshold provided preferably in the opening of the house further enhances this advantage. Furthermore, the fastening of the fence to the house in a single fastening and pivot point is particularly simple. The rail construction present in the known animal shelter is not only a burden on the house, but also comparatively expensive. Finally, it is an advantage that it is possible now also to pivot the house into the fence in a satisfactory manner. The house may then bear with said flange on the ends of the fence and will substantially not be loaded mechanically. The floor of the house may then be cleaned of manure and provided with fresh straw in a simple manner.

In a further preferred embodiment, slider or roller means are present against the fence or against a wall of the house adjacent the lower side of the fence or the house. The house may thus be connected to the ground in a simple manner without allowing wind or water to enter, while the animal shelter may yet be moved in a simple manner, i.e. in that the fence or house is lifted at an opposite side and subsequently pushed or pulled. The floor of the shelter may be cleaned and provided with fresh straw after such a displacement.

Preferably, the slider or roller means comprise one or several wheels which are fastened to that wall of the house which is provided with the opening. The animal shelter can now be moved forward or backward, so that an arrangement of the animal shelters close to one another in a row is still very well possible. If only one wheel is present, it is preferably comparatively wide and placed in the center in front of the house. Preferably, a wheel is present both to the left and to the right of the opening against the front wall of the house. Moving of the house is now easy, both with the fence placed alongside the house and with the fence pivoted over the house. The entire shelter may thus be readily displaced with no more than two wheels. The house can also be moved with an animal inside thanks to the closure, which can be opened, in the opening of the house, after the fence has been pivoted over the house. If the displacement is performed with care, the animal will move along with it. The front wall of the fence and/or the rear wall of the house are/is provided with a handle, so that the lifting followed by pushing or pulling is made easier.

Preferably, both the pivotable fastening of the fence to the house and the fastening of the wheels to the house are effected by means of no more than two components. Each component preferably comprises a metal plate which is fastened against the house adjacent the bottom and adjacent the outer side thereof, for example by means of screws. A first shaft is fixed to the plate and acts as a pivot to which the fence is pivotably attached. The plate has a free end extending away from the house in downward direction to which a second shaft is fastened so as to support the wheel. The plate may alternatively be fastened to the threshold mentioned above, which for this purpose would extend over the full width of the house. A particularly robust, durable, and yet simple construction is achieved thereby. As a result, the animal shelter according to the invention can be manufactured comparatively inexpensively and in a simple manner, especially if the house is made of synthetic resin.

The fence may be manufactured in one piece, for example in that the two side walls are welded to the front wall. Preferably, the side walls are detachably fastened to the front wall and to the house. All parts of the fence may then be transported in a particularly compact, i.e. flat shape, for example from the manufacturer to the customer. The customer himself may then put the fence together and fasten it to the house.

The invention further relates to a fence suitable for use in an animal shelter according to the invention and comprising two planar side walls and a planar front wall which are detachably fastened to one another and in which a recess is present, in the front wall, with a height smaller than that of the fence proper and with a movable, preferably removable, part therein.

The invention will now be explained in more detail with reference to an embodiment and the accompanying drawing, in which
Figs. 1A and 1B diagrammatically show a first embodiment of an animal shelter according to the invention in perspective view,
Figs. 2A and 2B diagrammatically show another animal shelter, not according to the invention.
Figs. 3A, 3B, and 3C diagrammatically show a second embodiment of an animal shelter according to the invention in perspective view,
Fig. 4 diagrammatically shows a detail referenced IV in Fig. 3C of the animal shelter of Figs. 3A, 3B, and 3C on an enlarged scale,
Fig. 5 diagrammatically shows three elevations of the front wall of the fence of the animal shelter of Figs. 3A, 3B, and 3C,
Fig. 6 diagrammatically shows three elevations of the movable part of the front wall of the fence of the animal shelter of Figs. 3A, 3B, and 3C, and
Figs. 7A, 7B, 7C, 7D, and 7E diagrammatically show the animal shelter of Figs. 3A, 3B, and 3C in various positions in side elevation.

The Figures are not drawn true to scale and some dimensions have been exaggerated for reasons of clarity. Corresponding components have been given the same reference numerals as much as possible.

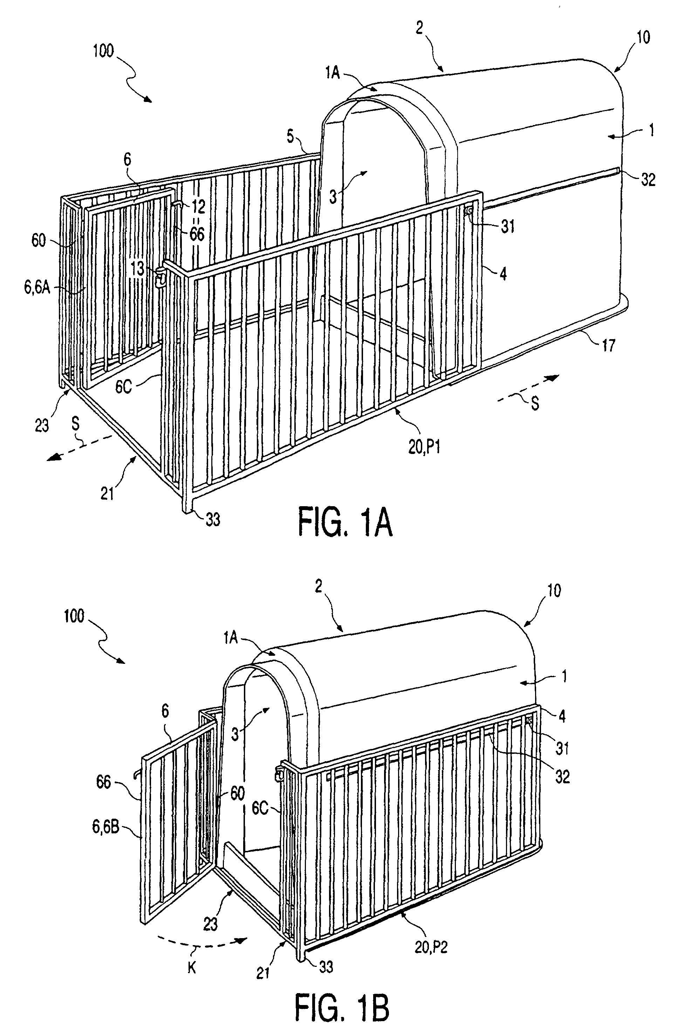

Figs. 1A and 1B diagrammatically show a first embodiment of an animal shelter 100 according to the invention, in this example for a calf, in perspective view. The animal shelter 100 comprises a house 10 which is provided with walls 1 and a roof 2, but which has no floor. A fence 20 is fastened to the house 10, which fence has a U-shape when seen in projection and whose free ends 4, 5 are each fastened by means of a peg 31 to a rail 32 provided on a respective side wall of the house 10. Fig. 1A shows the fence 20 in a first position P1 in which it forms a pen in front of a wall 1A of the house 10 which is provided with an opening 3. In Fig. 1B, the fence 20 has been passed alongside the house 10 into a second position P2.

According to the invention, a part 6 of the fence 20 is movable relative to the fence 20 and in the first position P1, see Fig. 1A, forms a closure 6A which can be opened for the pen, said part 6 being situated in a recess 6C of the fence 20 which has a smaller height than the fence proper 20. On the one hand, this renders the pen and the house 10 accessible, so that they can be easily cleaned. On the other hand, the fence 20 has a sufficient coherence and sturdiness owing to a fixed interconnection, formed by a further fence portion 26, between the portions of the fence 20 lying on either side of the part 6. As a result of this, the fence 20 can (still) be easily passed alongside the house 10 into the second position P2 in a direction referenced S. The position of the movable part in the front wall 21 of the fence 20 renders the house 10 accessible also when the fence 20 is in the second position P2, see Fig. 1B, for example for cleaning. In both positions P1 and P2, moreover, an animal can be easily moved into or from the pen or the house. In this example, the movable part 6 of the fence 20 is fastened to the fence 20 at one side 60 thereof with hinging possibility, while it can be collapsed outwards from the fence at an opposite side 66.

The lower side of the house 10 is provided with an outwardly directed flange 17 so that the house 10 rests securely and draft-free on a ground surface (not shown in the drawing). The fence can also be easily passed over the flange 17 from the first position P1 into the second position P2, so that the load on the rail 32 can be small. The fence 20 in this example is made of steel and is provided with legs 33 at the front which are 10 cm high here. The front wall 21 of the fence 20 is 110 cm wide and 80 cm high here, exclusive of the legs 33. The recess 6C in the fence 20 is 85 cm wide and 70 cm high here. The movable part 6 has dimensions which are, for example, 0.5 cm smaller than those of the recess 6C. The further portion 23 of the fence 20. which provides a fixed interconnection between the portions of the fence 20 lying on either side of the part 6, is approximately 10 cm high here. The total threshold height is the sum of the heights of the legs 33 and the further portion 23, i.e. 20 cm. This height forms no problem for humans and animals such as calves. The side walls of the fence 20 have the same height as the front wall 21 and are 150 cm long. The part 6 and the fence 20 are provided with locking means 12, 13 for locking the part 6 to the fence 20. The part 6 is hinged to the fence 20 at one side 6A of the fence 20. The house is approximately 100 cm wide, 200 cm long, and 150 cm high in this example and is made of synthetic resin. Around the opening 3 in the front wall 1 A there is a 15 cm deep sleeve which protects the interior of the house 10 from rain and wind to a certain extent.

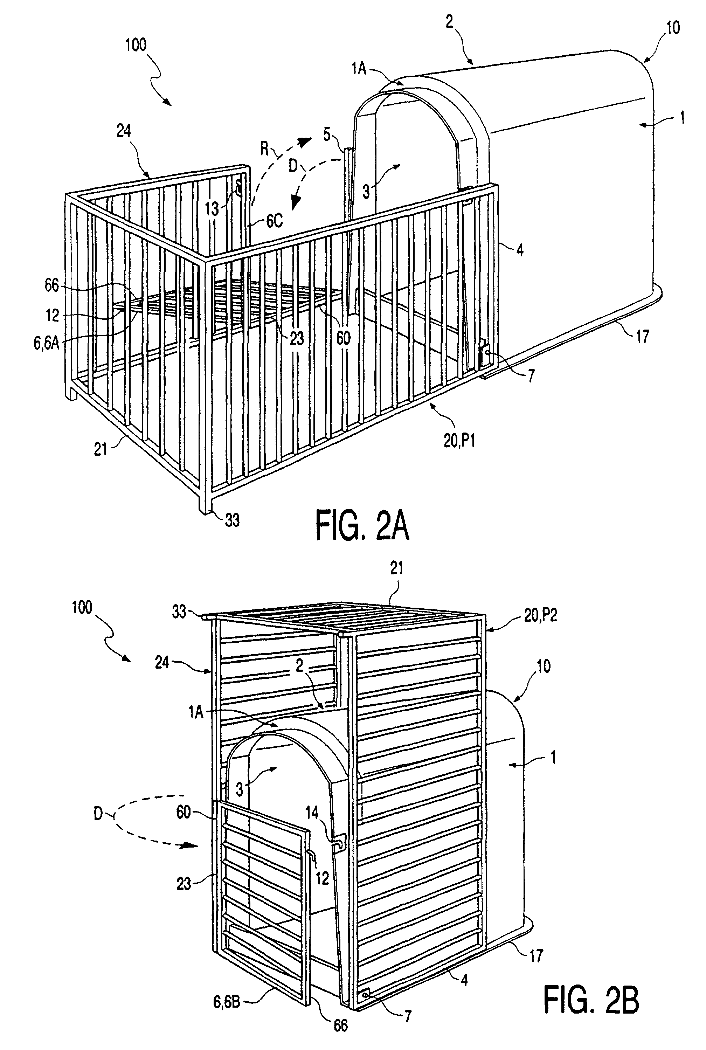

Figs. 2A and 2B diagrammatically show another animal shelter not according to the invention in perspective view. The fence 20 in this example is fastened to the house 10 by means of a shaft 7. The shaft 7 at the same time serves as a center of rotation 7. The fence 20 may thus be pivoted about the shaft 7 through rotation in the direction referenced R from the first position P1 shown in Fig. 2A into the second position P2 shown in Fig. 2B. The free ends 4, 5 of the fence 20 will then rest on the flange 17. In the second position P2, the space in front of the house 10 as well as the house 10 itself can be cleaned quite easily. In this example, the part 6 which is movable relative to the fence 20 is located adjacent a free end 5 of the fence 20. The portion 23 which gives the fence its fixed shape in this example consists of a round tube 23 with a diameter of, for example, 3 cm, around which the part 6 can freely rotate at its side 6A in a direction referenced D. The part 6 forms a closure 6A, which can be opened, when the fence is in its first position P1. The part 6 can be hinged down through 90°, so that humans and animals can enter the pen enclosed by the fence 20. With the fence 20 in its second position P2, the part 6 can be collapsed outwards through 270°, so that it forms a closure 6B, which can be opened, in front of the opening 3 in the front wall 1A of the house 10. A calf may be boxed in in(to) the house 10 also in the second position P2 in this example thanks to the closure 6B which can be opened. For this purpose, the front wall 1A of the house 10 in this example is provided with locking means 14 next to the opening 3, which means are similar to the locking means 13 on the fence 20. The movable part 6 may alternatively be locked to the opposite side of the fence 20 in the second position P2, if so desired, given suitably chosen dimensions of the fence 20 and the house 10.

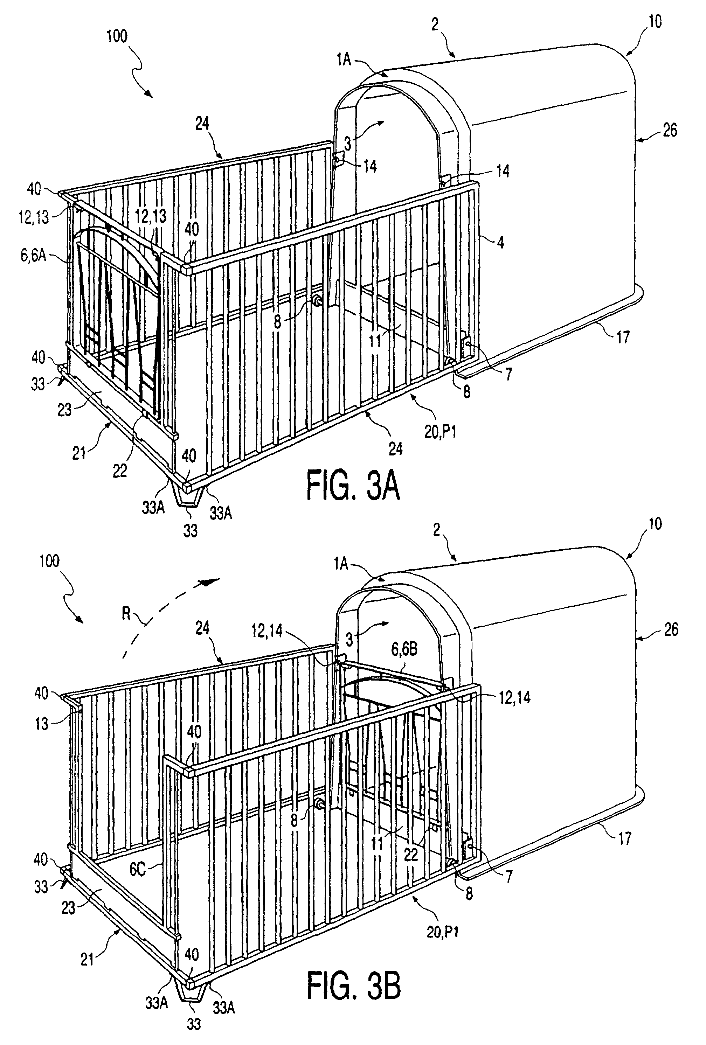

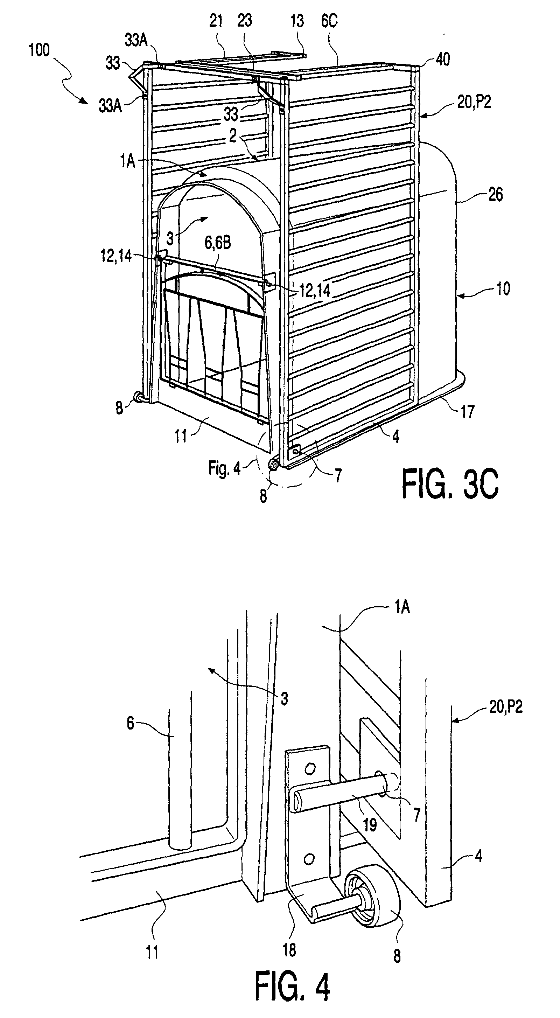

Figs. 3A, 3B, and 3C diagrammatically show a second embodiment of an animal shelter 100 according to the invention in perspective view. In the calf shelter 100 of this preferred embodiment, the fence 20 can be pivoted over the house 10 about a shaft 7, as in the second example. In this example, the movable part 6 can be entirely removed from the fence 20 and is located in the front wall 21 of the fence 20 (see Fig. 3A). A portion 23 of the front wall 21 situated under the part 6 can now be comparatively high again, for example 20 cm high as in the present case, so that the fence 20 can be particularly rigid and accordingly can be readily pivoted. The fact that the part 6 is present in the front wall 21 of the fence 20 implies that a large number of animal shelters (100) can be placed closely side by side, which is a major advantage. Before the fence 20 is pivoted in the direction indicated with R (see Fig. 3B), the part 6 may be taken from the front wall 21 and placed in the opening 3 of the house 10. The part 6, the fence 20, and the house 10 are for this purpose provided with suitable locking means 12, 13, 14. A threshold 11 is provided at the lower side of the opening 3 of the house 10, having a function similar to that of the further portion 23 of the fence 20 lying below the part 6. The threshold 11 also gives a particular sturdiness to at least the front wall 1A of the house 10, which is again made of synthetic resin in this example. The fence 20 is removable in this example. The front wall 21 is fastened to the two side walls 24 by means of synthetic resin fastening plugs 40 which can be clamped in into hollow portions of the walls 21, 24 of the fence 20. A particularly robust connection is achieved here by the V-shaped legs 33 of the fence 20, which are fastened to the front wall 21 as well as to the side walls 24 of the fence 20 by means of screws 33A. Fig. 3C shows the animal shelter 100 after the fence 20 has been pivoted over the house 10. It is clearly apparent from this Figure that a wheel 8 is mounted to the left and to the right of the opening 3 at the front of the house 10.

Fig. 4 diagrammatically shows a detail referenced IV in Fig. 3C of the animal shelter 100 in perspective view and on an enlarged scale. The shaft 7, which also serves as a fastening point for the fence 20, is fastened to a metal plate 18 which is screwed to the front wall 1A of the house 10 and into the threshold 1 present in and next to the opening 3. An end of the plate 18 is bent away from the house 10, and a wheel 8 is fastened to this end. The wheels are positioned such that they just touch the ground or lie slightly above it. As a result of this, the house 10 rests fully on the flange 17, and a closure impermeable to water and draft is safeguarded for the house 10. Nevertheless, the house 10 can be easily moved about thanks to the wheels 8 when the house 10 is lifted at its rear side 26. The house 10 then will rest on the wheels 8. If this is done with the fence 20 in the second position P2 (see Fig. 3C), the entire calf box assembly 100 can be moved in a simple manner with no more than two wheels 8. This may even be done - with due care - while a calf is present in the house 10. After such a move the manure can be easily and thoroughly removed from the house 10 and fresh straw can be provided therein. Such an arrangement of the wheels 8, whereby the house 10 can be readily moved forward and back again, renders it possible to place a large number of animal shelters 100 closely together in a row. When all have been moved forward (or backward) then, the removal of manure and the supply of fresh straw may readily be effected by machine for all animal shelters 100 in succession. This is a major advantage.

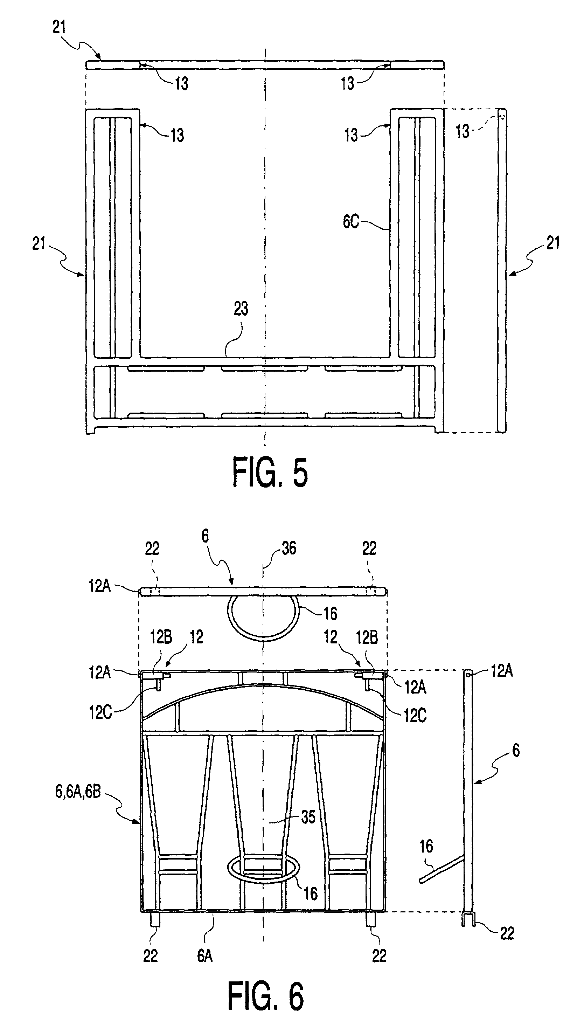

Fig. 5 diagrammatically shows three elevations, i.e. from the front, top, and side, of the front wall 21 of the fence 20 of the animal shelter 100 in the present embodiment. Fig. 6 does the same for the removable part 6 of the fence 20. These Figs. show especially the construction of the mating fastening means 22 and locking means 12, 13 mounted to the part 6 and the front wall 21 of the fence 20. The connection plugs 40 are not shown, and the legs 33 of the fence are indicated summarily only. The lower side of the removable part 6 (see Fig. 6) is provided with a profile 22 which engages the upper side of the further portion 23 of the front wall 21 (see Fig. 5). The locking means 12 of the part 6 comprise a tube 12B in which a bolt 12A is present which can be moved into and out of the tube 12B by means of a handle 12C attached to the bolt 12A. The handle 12C projects through a slot in the tube 12B to the exterior. A spring (not shown) is also present in the tube 12B, forcing the bolt 12A towards the outside. The front wall 21 of the fence 20 is provided with locking means 13, in the form of a hole 13 here, into which the bolt 12A is inserted. The part may thus be placed in the recess 6C of the fence 20, fastened therein, and removed again in a simple manner through the mating and cooperating locking means 12, 13, 14. The same is true for the part 6 with respect to the house 10, where the threshold 11 (see Fig. 3C) fulfills the same function as the further portion 23 of the fence 20 and the locking means 14 fulfill the same function as the locking means 13. The movable part 6 is provided with means 16 for fastening a feed trough (not shown in the drawing). In this example, the means 16 comprise a pivotable metal ring 16 which is fastened to the part 6 and in which a conical bucket with water or fodder can be placed. The part 6 is also provided with an opening 35 through which the calf can pass its head so as to reach the water or fodder. The mirrored symmetry of the part 6 with respect to the axis 36 means that the part 6 may readily be constructed such that it can also be mounted in the opening 3 with the means 16 on the inside of the house 10. This offers a possibility of protecting the fodder from rain in a situation in which the calf is enclosed in the house 10. An important additional advantage of this method of mounting a feed trough is that, after the part 6 has been mounted in the opening 3 of the house 10, the feed trough will not be pivoted along with a pivoting movement of the fence 20 over the house 10 and can accordingly not be wholly or partly emptied thereby.

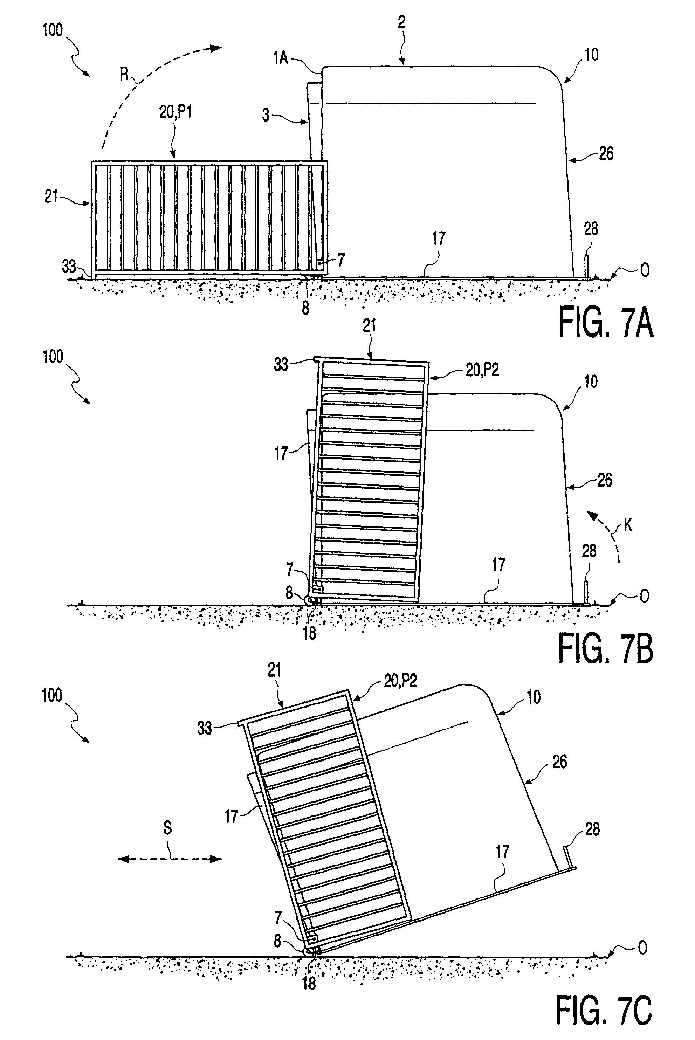

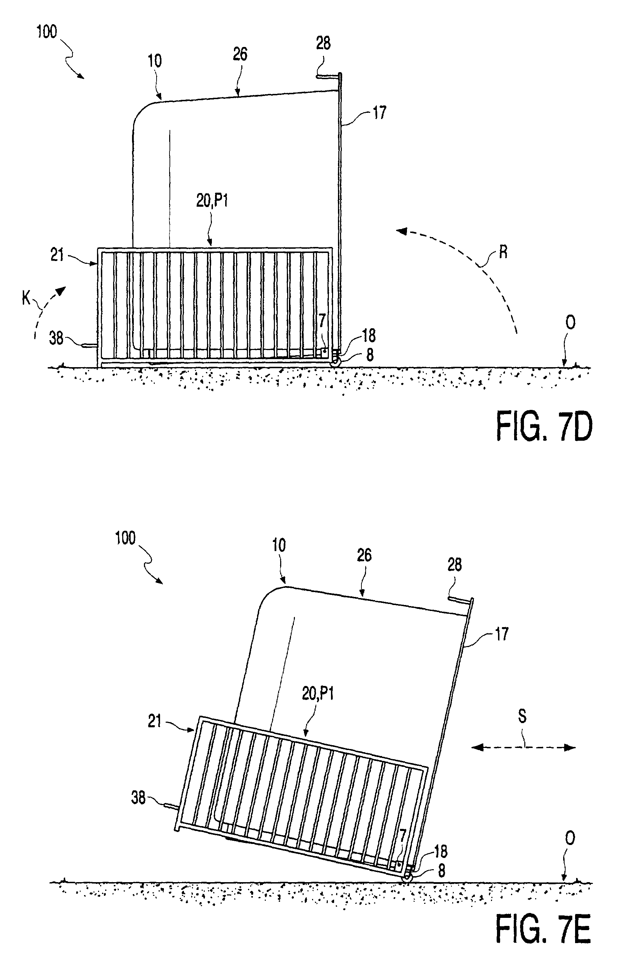

Figs. 7A to 7E diagrammatically show the second embodiment of the animal shelter 100 in side elevation in various positions. The connection plugs 40 are not shown again, and the legs 33 summarily only. Fig. 7A is a side elevation of the animal shelter 100 of Figs. 3A and 3B placed on a base surface O. The direction of rotation of the fence 20 over the house 10 is referenced R. A handle 28 is screwed to the flange 17 at the rear side of the house 10. Fig. 7B, which corresponds to Fig. 3C, shows the animal shelter 100 after pivoting of the fence 20. The house 10 may now be pivoted in a direction K by means of the handle 28, resulting in the situation depicted in Fig. 7C. Then the entire animal shelter 100 can be moved in a simple manner in that the house 10 is shifted in a direction S by pulling or pushing. Fig. 7D shows a situation in which, starting from the situation of Fig. 3A or 3B, the house 10 in this third embodiment may also be pivoted in the same direction as the fence 20 by a rotation of the house 10 through 90° in the direction R. Now the fence 20 may be slightly tilted in the direction K by means of a handle 38 provided at the front side 21 of the fence 20 in this case. Then (see Fig. 7E) the entire animal shelter 100 may again be moved through pulling or pushing of the fence 20 in the directions S.

The invention is not limited to the embodiments described, many modifications and variations being possible to those skilled in the art within the scope of the appended claims. Thus the fence and the house may have different dimensions and be made of materials other than those mentioned in the examples. Furthermore, the house may be more rectangular in shape, and the fence by contrast less rectangular. The further portion of the fence is below the movable part in all examples given here. An arrangement above, or above and below said part is equally possible.

## Claims

1. An animal shelter (100) with a house (10) which is provided with walls (1) and a roof (2) and of which one wall (1A) is provided with an opening (3), and with a fence (20) provided with a front wall (21) and two side walls (24) whose free ends (4, 5) are movably fastened to the house (10), which fence (20) in a first position (P1) forms a pen in conjunction with the wall (1A) of the house (10) provided with the opening (3) in the space in front of the opening (3) and is displaceable from said first position (P1) into a second position (P2) in which the side walls (24) of the fence (20) lie on either side of the house (10) such that the space in front of the opening (3) becomes freely accessible, **characterized in that** that the fence (20) comprises a part (6) which is moveable relative to the fence (20), which provides the fence (20) with a closure (6A) which can be opened when the fence (20) is in the first position (P1), and which is present in a recess (6C) of the fence (20) having a smaller height than the fence (20) proper, and **in that** said part (6) is present in the front wall (21) of the fence (20).

2. An animal shelter (100) as claimed in claim 1, **characterized in that** the part (6) provides the opening (3) of the house (10) with a closure (6B), which can be opened, after the fence (20) has been displaced from the first position (P1) into the second position (P2) and possibly after a movement of the part (6).

3. An animal shelter (100) as claimed in claim 1 or 2, **characterized in that** the part (6) of the fence (20) is fastened to the fence (20) with hinging possibility at one side (60), and in a manner so as to be collapsible outwards at another side (66) opposed to the side (60).

4. An animal shelter (100) as claimed in claim 3, **characterized in that** the fence (20) can be passed along the sides of the house (10).

5. An animal shelter (100) as claimed in claim 3, **characterized in that** the fence (20) can be pivoted over the house (10).

6. An animal shelter (100) as claimed in claim 1 or 2, **characterized in that** the movable part (6) of the fence (20) is removable therefrom and can be fastened in or in front of the opening (3) of the house (10) in a detachable manner.

7. An animal shelter (100) as claimed in claim 5 or 6, **characterized in that** the lower side of the movable part (6) of the fence (20) is provided with a profile (22) which mates with a further portion (23) of the fence (20) present below said part (6) and with a threshold (11) fastened in the lower side of the opening (3) of the house (10), while the movable part (6), the fence (20), and the house (10) are provided with means (12, 13, 14) for locking the movable part (6).

8. An animal shelter (100) as claimed in any one of the preceding claims, **characterized in that** the part (6) is provided with means (16) for fastening a feed trough.

9. An animal shelter (100) as claimed in any one of the preceding claims, in which the fence (20) is pivotably fastened to a point (7) of the house (10), **characterized in that** the fastening point (7) is situated close to the lower side of the house (10) and the fence (20).

10. An animal shelter (100) as claimed in any one of the preceding claims, **characterized in that** one or several slider or roller means (8) are fastened to the house (10) or to the fence (20) adjacent the lower side of the house (10) or the fence (20).

11. An animal shelter (100) as claimed in claim 10, **characterized in that** the slider or roller means (8) comprise one or several wheels (8) which are present in front of that wall (1A) of the house (10) which is provided with the opening (3) and which in the first position (P1) of the animal shelter (100) at are at most tangent to the ground (O).

12. An animal shelter (100) as claimed in claim 11, **characterized in that** a metal plate (18) is fastened to the house (10) on either side of the opening (3), to which plate (18) a shaft (19) is fastened which acts as a fastening and pivot point (7) for the fence (20) and of which plate (18) a free end extends away from the front wall (1A) of the house (10) and is provided with a wheel (8).

13. An animal shelter (100) as claimed in claim 10, 11, or 12, **characterized in that** a wall (26) of the house (10) or a wall (21) of the fence (20) located opposite to the slider or roller means (8) is provided with a handle (28, 38).

14. An animal shelter (100) as claimed in any one of the preceding claims, **characterized in that** the lower side of the house (10) is provided with an outwardly directed flange (17).

15. An animal shelter (100) as claimed in any one of the preceding claims, **characterized in that** the front wall (21) and the side walls (24) of the fence (20) are planar and are detachably fastened to one another, and the side walls (24) are detachably fastened to the house (10).

16. An animal shelter (100) as claimed in any one of the preceding claims, **characterized in that** the dimensions of the house (10) and of the fence (20) are designed for the accommodation of a calf therein.

17. A fence (20) suitable for an animal shelter (100) as claimed in any one of the preceding claims, **characterized in that** the fence (20) comprises two planar side walls (24) and a planar front wall (21) which are detachably fastened to one another, and comprises a recess (6C) with a height smaller than that of the fence (20) proper, in which recess a movable part (6) is present and the recess (6C) and the movable part (6) are present in the front wall (21) of the fence (20).

## Patentansprüche

1. Tierunterkunft (100) mit einer Box (10), die mit Wänden (1) und einem Dach (2) versehen ist und wobei eine Wand (1A) mit einer Öffnung (3) versehen ist, und mit einem Zaun (20), der mit einer Vorderwand (21) und mit zwei Seitenwänden (24) versehen ist, deren freien Enden (4, 5) beweglich mit der Box (10) verbunden sind, wobei dieser Zaun (20) in einer ersten Lage (P1) einen Auslauf bildet, und zwar in Verbindung mit derjenigen Wand (1A) der Box (10), die mit der Öffnung (3) versehen ist in dem Raum vor der Öffnung (3) und aus der genannten ersten Lage (P1) in eine zweite Lage (P2) verlagerbar ist, in der die Seitenwände (24) des Zauns (20) an je einer Seite der Box (10) liegen, so dass der Raum vor der Öffnung (3) frei zugänglich wird, **dadurch gekennzeichnet, dass** der Zaun (20) einen Teil (6) aufweist, der gegenüber dem Zaun (20) beweglich ist, dass der Zaun (20) ein Abschlusselement (6A) hat, das geöffnet werden kann, wenn der Zaun (6) sich in der ersten Lage (P1) befindet, und sich in einer Ausnehmung (6C) des Zauns (20) mit einer geringeren Höhe als der Zaun (20) selber befindet; und dass der genannte Teil (6) sich in der Vorderwand (21) des Zauns (20) befindet.

2. Tierunterkunft (100) nach Anspruch 1, **dadurch gekennzeichnet, dass** der Teil (6) die Öffnung (3) der Box (10) mit einem Abschlusselement (6B) versieht, das geöffnet werden kann, nachdem der Zaun (20) aus der ersten Lage (P1) in die zweite Lage (P2) verlagert worden ist, und ggf. nach einer Verlagerung des Teils (6).

3. Tierunterkunft (100) nach Anspruch 1 oder 2, **dadurch gekennzeichnet, dass** der Teil (6) des Zauns (20) mit Scharniermöglichkeit an einer Seite (60) an dem Zaun (20) befestigt ist und zwar auf eine Art und Weise, dass er zu einer anderen Seite (66) gegenüber der Seite (60) ausklappbar ist.

4. Tierunterkunft (100) nach Anspruch 3, **dadurch gekennzeichnet, dass** der Zaun (20) längs der Seiten der Box (10) verlagert werden kann.

5. Tierunterkunft (100) nach Anspruch 3, **dadurch gekennzeichnet, dass** der Zaun (20) über die Box (10) geschwenkt werden kann.

6. Tierunterkunft (100) nach Anspruch I oder 2, **dadurch gekennzeichnet, dass** der bewegliche Teil (6) des Zauns (20) von demselben entfembar ist und in oder vor der Öffnung (3) der Box (10) entfembar angeordnet werden kann.

7. Tierunterkunft (100) nach Anspruch 5 oder 6, **dadurch gekennzeichnet, dass** die untere Seite des beweglichen Teils (6) des Zauns (20) mit einem Profil (22) versehen ist, das mit einem weiteren Teil (23) des Zauns (20) unterhalb des genannten Teils (6) und mit einer Schwelle (11) in der unteren Seite der Öffnung (3) der Box (10) zusammenarbeitet, während der bewegliche Teil (6), der Zaun (20) und die Box (10) mit Mitteln (12, 13, 14) zum Verriegeln des beweglichen Teils (6) versehen sind.

8. Tierunterkunft (100) nach einem der vorstehenden Ansprüche, **dadurch gekennzeichnet, dass** der Teil (6) mit Mitteln (16) zum Befestigen eines Futtertrogs versehen ist.

9. Tierunterkunft (100) nach einem der vorstehenden Ansprüche, wobei der Zaun (20) an einem Punkt (7) der Box (10) schwenkbar befestigt ist, **dadurch gekennzeichnet, dass** der Befestigungspunkt (7) sich in der Nähe der unteren Seite der Box (10) und des Zauns (20) befindet.

10. Tierunterkunft (100) nach einem der vorstehenden Ansprüche, **dadurch gekennzeichnet, dass** ein oder mehrere Schiebe- oder Rollenmittel (8) an der Box (10) oder an dem Zaun (20) befestigt sind, und zwar in der Nähe der unteren Seite der Box (10) oder des Zauns (20).

11. Tierunterkunft (100) nach Anspruch 10, **dadurch gekennzeichnet, dass** die Schiebe- oder Rollenmittel (8) ein oder mehrere Räder (8) aufweisen, die vor derjenigen Wand (1A) der Box (10) vorgesehen sind, die mit der Öffnung (3) versehen ist und die in der ersten Lage (P1) der Tierunterkunft (100) dem Boden (O) am nächsten ist.

12. Tierunterkunft (100) nach Anspruch 11, **dadurch gekennzeichnet, dass** auf beiden Seiten der Öffnung (3) an der Box (10) eine Metallplatte (18) vorgesehen ist, wobei an dieser Platte (18) eine Achse (19) befestigt ist, die als Befestigungs- und Schwenkpunkt (7) für den Zaun (20) wirksam ist und wobei ein freies Ende der Platte (18) sich weg von der Vorderwand (1A) der Box (10) erstreckt und mit einem Rand (8) versehen ist.

13. Tierunterkunft (100) nach Anspruch 10, 11 oder 12, **dadurch gekennzeichnet, dass** eine Wand (26) der Box (10) oder eine Wand (21) des Zauns (20) gegenüber den Schiebe- oder Rollenmitteln (8) mit einem Griff (28, 38) versehen ist.

14. Tierunterkunft (100) nach einem der vorstehenden Ansprüche, **dadurch gekennzeichnet, dass** die untere Seite der Box (10) mit einem auswärts gerichteten Flansch (17) versehen ist.

15. Tierunterkunft (100) nach einem der vorstehenden Ansprüche, **dadurch gekennzeichnet, dass** die Vorderwand (21) und die Seitenwände (24) des Zauns (20) flach und entfernbar aneinander befestigt sind, und die Seitenwände (24) entfernbar an der Box (10) befestigt sind.

16. Tierunterkunft (100) nach einem der vorstehenden Ansprüche, **dadurch gekennzeichnet, dass** die Abmessungen der Box (10) und des Zauns (20) als Unterkunft für ein Kalb gemeint sind.

17. Zaun (20) geeignet für eine Tierunterkunft (100) nach einem der vorstehenden Ansprüche, **dadurch gekennzeichnet, dass** der Zaun (20) zwei flache Seitenwände (24) und eine flache Vorderwand (21) hat, die entfernbar an einander befestigt sind und eine Ausnehmung (6C) aufweist, deren Höhe kleiner ist als die des Zauns (20) selber, wobei in dieser Ausnehmung ein beweglicher Teil (6) vorgesehen ist, und die Ausnehmung (6C) sowie der bewegliche Teil (6) in der Vorderwand (21) des Zauns (20) vorgesehen sind.

## Revendications

1. Abri pour animaux (100) comprenant une cabane (10) qui est munie de parois (1) et d'un toit (2) et dont une paroi (1A) est munie d'une ouverture (3), et une clôture (20) munie d'une paroi avant (21) et de deux parois latérales (24) dont les extrémités libres (4, 5) sont fixées de façon mobile à la cabane (10), laquelle clôture (20) forme, dans une première position, un parc ensemble avec la paroi (1A) de la cabane (10) munie de l'ouverture (3) dans l'espace présent en face de l'ouverture (3) et peut être déplacée à partir de ladite première position (P1) dans une deuxième position (P2) dans laquelle les parois latérales (24) de la clôture (20) sont situées des deux côtés de la cabane (10) de façon que l'espace situé en face de l'ouverture (3) devienne librement accessible, **caractérisé en ce que** la clôture (20) comprend une partie (6) qui est mobile par rapport à la clôture (20), qui munit la clôture (20) d'une fermeture (6A) qui peut être ouverte lorsque la clôture (20) se trouve dans la première position (P1), et qui est présente dans une embrasure (6C) de la clôture (20) présentant une plus petite hauteur que la clôture proprement dite (20), et **en ce que** ladite partie (6) est présente dans la paroi avant (21) de la clôture (20).

2. Abri pour animaux (100) selon la revendication 1, **caractérisé en ce que** la partie (6) munit l'ouverture (3) de la cabane (10) d'une fermeture (6B), qui peut être ouverte, après que la clôture (20) est déplacée à partir de la première position (P1) dans la deuxième position (P2) et éventuellement après un déplacement de la partie (6).

3. Abri pour animaux (100) selon la revendication 1 ou 2, **caractérisé en ce que** la partie (6) de la clôture (20) est fixée de façon articulée d'un côté (60) à la clôture (20), et de façon à pouvoir être dépliée vers l'extérieur d'un autre côté (66) opposé au côté (60).

4. Abri pour animaux (100) selon la revendication 3, **caractérisé en ce que** la clôture (20) peut être coulissée le long des côtés de la cabane (10).

5. Abri pour animaux (100) selon la revendication 3, **caractérisé en ce que** la clôture (20) peut être basculée sur la cabane (10).

6. Abri pour animaux (100) selon la revendication 1 ou 2, **caractérisé en ce que** la partie mobile (6) de la clôture (20) en est amovible et peut être fixée de façon détachable dans ou en face de l'ouverture (3) de la cabane (10).

7. Abri pour animaux (100) selon la revendication 5 ou 6, **caractérisé en ce que** la face inférieure de la partie mobile (6) de la clôture (20) est munie d'un profil (22) qui s'adapte à une autre partie (23) de la clôture (20) présente au-dessous de ladite partie (6) et d'un seuil (11) fixé dans le dessous de l'ouverture (3) de la cabane (10), alors que la partie mobile (6), la clôture (20) et la cabane (10) sont munies de moyens (12, 13, 14) servant à verrouiller la partie mobile (6).

8. Abri pour animaux (100) selon l'une des revendications précédentes, **caractérisé en ce que** la partie (6) est munie de moyens (16) servant à fixer une auge

9. Abri pour animaux (100) selon l'une des revendications précédentes, dans lequel la clôture (20) est fixée de façon à pouvoir basculer à un point (7) de la cabane (10), **caractérisé en ce que** le point de fixation (7) est situé tout près de la partie inférieure de la cabane (10) et de la clôture (20).

10. Abri pour animaux (100) selon l'une des revendications précédentes, **caractérisé en ce qu'**un ou plusieurs moyen(s) de coulissement ou de roulement (8) est/sont fixé(s) à la cabane (10) ou à la clôture (20) près de la partie inférieure de la cabane (10) ou de la clôture (20).

11. Abri pour animaux (100) selon la revendication 10, **caractérisé en ce que** les moyens de coulissement ou de roulement (8) comprennent une ou plusieurs roues (8) qui sont présentes en face de la paroi (1A) de la cabane (10) qui est munie de l'ouverture (3) et qui, dans la première position (P1) de l'abri pour animaux (100), sont au maximum en contact avec la terre (O).

12. Abri pour animaux (100) selon la revendication 11, **caractérisé en ce qu'**une plaque métallique (18) est fixée à la cabane (10) des deux côtés de l'ouverture (3), plaque (18) à laquelle est fixé un axe (19) qui fait office de point de fixation et de basculement (7) pour la clôture (20) et dont une extrémité libre s'écarte de la paroi avant (1A) de la cabane (10) et est munie d'une roue (8).

13. Abri pour animaux (100) selon la revendication 10, 11 ou 12, **caractérisé en ce qu'**une paroi (26) de la cabane (10) ou une paroi (21) de la clôture (20) située en face des moyens de coulissement ou de roulement (8) est munie d'une poignée (28, 38).

14. Abri pour animaux (100) selon l'une des revendications précédentes, **caractérisé en ce que** la face inférieure de la cabane (10) est munie d'un flasque dirigé vers l'extérieur (17).

15. Abri pour animaux selon l'une des revendications précédentes, **caractérisé en ce que** la paroi avant (21) et les parois latérales (24) de la clôture (20) sont planes et sont fixées de façon détachable les unes aux autres, et les parois latérales (24) sont fixées de façon détachable à la cabane (10).

16. Abri pour animaux (100) selon l'une des revendications précédentes, **caractérisé en ce que** les dimensions de la cabane (10) et de la clôture (20) sont choisies pour le logement d'un veau.

17. Clôture (20) appropriée à un abri pour animaux (100) selon l'une des revendications précédentes, **caractérisée en ce que** la clôture (20) comprend deux parois latérales planes (24) et une paroi avant plane (21) qui sont fixées de façon détachable les unes aux autres, et est munie d'une embrasure (6C) présentant une hauteur plus petite que celle de la clôture proprement dite (20), embrasure dans laquelle est présente une partie mobile (6) et l'embrasure (6C) et la partie mobile (6) sont présents dans la paroi avant (21) de la clôture (20).
